# FASCICULE DE BREVET EUROPEEN

(11) **EP 2 425 697 B1**
(45) Date de publication et mention de la délivrance du brevet: **31.07.2013**
(21) Numéro de dépôt: 11290387.7
(22) Date de dépôt: 01.09.2011
(51) Int. Cl.: A01B 29/04

(54) **Ensemble de rouleau pour machines agricoles**
Walzenanordnung für landwirtschaftliche Maschinen
Roller assembly for agricultural machines

(30) Priorité: 03.09.2010 FR 1003521
(43) Date de publication de la demande: 07.03.2012
(73) Titulaire: OTICO, 77650 Chalmaison (FR)
(72) Inventeur: Piou, Denis, 89340 Villeblevin (FR); Martin Cabanas, Daniel, 77130 St. Germain Laval (FR)
(74) Mandataire: Bezault, Jean

(56) Documents cités:
- EP-A1- 1 380 198
- EP-A1- 1 856 963
- WO-A1-2007/123479
- FR-A1- 2 676 325

## Description

L'invention concerne un ensemble de rouleau destiné aux machines agricoles.

Les rouleaux de machines agricoles sont classiquement combinés à divers outils ou machines, comme des outils de travail du sol, des semoirs, etc. Le plus souvent une telle machine comprend une combinaison d'outils portée à l'arrière d'un tracteur et suivie par un rouleau. Le rouleau sert notamment à ré-appuyer la terre qui a été préalablement travaillée par les outils et à régler la profondeur de travail des outils.

Il existe de nombreux types de rouleaux qui vont du rouleau traditionnel constitué d'un cylindre métallique jusqu'aux rouleaux plus récents qui comprennent des éléments annulaires souples, tels que des pneumatiques, bandages ou analogues, enfilés sur un tube monté rotatif autour d'un axe. Il peut s'agir, par exemple, de pneumatiques gonflés ou non gonflés de type semi-creux.

L'invention porte plus particulièrement sur un ensemble de rouleau pour machine agricole, comprenant au moins un tube autour duquel sont enfilés des pneumatiques, ainsi que deux supports aptes à supporter le tube en rotation autour d'un axe à ses deux extrémités.

Un ensemble de rouleau de ce type est connu notamment par la publication FR-A-2 841 733 au nom de la Demanderesse. Dans cet ensemble de rouleau connu les pneumatiques sont de type semi-creux. Ils sont enfilés directement autour du tube et ne sont pas gonflés, ce qui leur confère une certaine souplesse. Ils ont généralement un profil en dôme ce qui permet de créer des sillons dans le sol, par exemple pour y semer des graines au moyen d'un semoir disposé à l'arrière du rouleau. En outre, cet ensemble connu est équipé d'un système de freinage pour exercer un couple résistant entre le tube et le bâti de la machine qui porte l'ensemble de rouleau.

La conception de tels ensembles de rouleaux est délicate du fait que les rouleaux doivent être capables de progresser en plein champ sur des sols souvent irréguliers parsemés de pierres ou autres débris et aussi de circuler sur des routes, dont les chaussées peuvent avoir des profils très différents, à des vitesses pouvant atteindre 40 km/h.

Il est fréquent de jumeler deux rouleaux sensiblement en alignement axial pour permettre à ces deux rouleaux d'avoir des vitesses de rotation différentes en cas de virage, ce qui facilite le virage en diminuant les frottements. Il est en effet préférable d'avoir, par exemple, deux rouleaux de 1,5 mètre de largeur plutôt qu'un rouleau 3 mètres de largeur.

Ainsi dans tous les cas, l'ensemble de rouleau doit pouvoir s'adapter aux irrégularités du sol et du profil de la chaussée de la route sur lesquels il circule. Il est connu aussi pour cela de prévoir des amortisseurs, comme enseigné par la publication FR-A-2 861 252 au nom de la demanderesse. Toutefois ces amortisseurs conviennent à des rouleaux de faibles largeurs et ils accroissent notablement la distance en hauteur et donc l'encombrement entre le rouleau proprement dit et le bâti de la machine.

L'invention a notamment pour but de surmonter les inconvénients précités.

Elle propose à cet effet un ensemble de rouleau, comme défini ci-dessus, dans lequel chaque bras porte un levier de suspension logé à l'intérieur du tube et sollicité par un organe de rappel élastique, et dans lequel le levier de suspension est monté pivotant sur le bras autour d'un premier axe de rotation et supporte un bout d'arbre qui porte un flasque fixé à l'intérieur du tube pour la rotation de ce tube autour d'un deuxième axe de rotation parallèle au premier axe de rotation.

On procure ainsi un ensemble de rouleau dont le ou chaque rouleau qui le compose est équipé, à ses deux extrémités, de moyens de suspension logés à l'intérieur du tube autour duquel sont enfilés les pneumatiques. Il en résulte un ensemble de rouleaux qui non seulement permet de s'adapter aux irrégularités du sol à travailler ou de la chaussée de route sur lequel l'ensemble de rouleaux doit progresser, mais aussi un agencement particulièrement compact des moyens de suspension.

Cela permet notamment de diminuer la hauteur entre l'axe de rotation du rouleau et le bâti support de la machine, qui est disposé au-dessus du rouleau.

Il en résulte une conception plus compacte et une simplification mécanique de l'ensemble de rouleau.

L'ensemble de rouleau peut comporter soit un seul rouleau, soit deux rouleaux disposés sensiblement dans l'alignement de l'un de l'autre, pour faciliter le virage.

Le tube peut recevoir différents types de pneumatiques, le terme "pneumatique" étant à considérer au sens large.

Il peut s'agir notamment de pneumatiques gonflés ou non, de bandages, de profil plat ou bombé.

Dans l'invention, il s'agit de préférence de pneumatiques à profil en dôme, notamment de pneumatiques de type semi-creux.

Ces pneumatiques à profil en dôme ont l'avantage de pouvoir créer des sillons parallèles dans le sol.

Egalement, ces pneumatiques peuvent être enfilés soit directement autour du tube, soit par l'intermédiaire de jantes.

Dans un ensemble de rouleau selon l'invention, le ou chaque rouleau est monté à rotation libre. Il est possible, dans certains cas, de prévoir un dispositif de freinage, également logé à l'intérieur du tube, lorsque la masse de la machine équipée de l'ensemble de rouleau rouleau dépasse un certain seuil défini.

Dans la description qui suit, faite seulement à titre d'exemple, on se réfère aux dessins annexés, sur lesquels :
- la figure 1 est une vue en coupe axiale d'un ensemble de rouleau selon l'invention comportant un seul rouleau équipé de pneumatiques de type semi-creux et muni également d'un organe de freinage, le plan de coupe passant par l'axe de rotation du rouleau ;
- la figure 2 est une vue en perspective de la partie inférieure d'un bras portant un levier de suspension et un organe de rappel élastique ;
- la figure 3 est une vue en perspective analogue à la figure 2, avec une coupe montrant la structure d'un tirant traversant l'organe de rappel élastique ;
- la figure 4 est une vue en perspective analogue à la figure 2, dans une autre configuration, le levier de suspension portant un bout d'arbre équipé d'un organe de freinage du type tambour ;
- la figure 5 est une autre vue en perspective analogue à la figure 4 avec une coupe passant par l'axe du tirant traversant l'organe de rappel élastique ; et
- la figure 6 est une vue en coupe axiale d'un ensemble de rouleau comprenant deux rouleaux analogues à celui de la figure 1, disposés sensiblement en alignement axial mutuel.

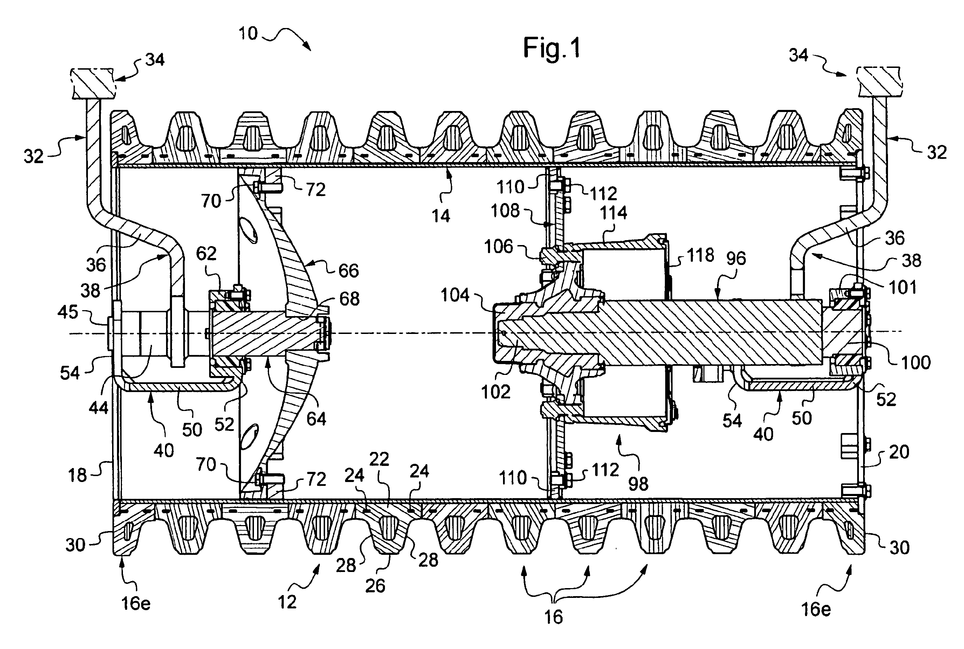

Il est fait référence à la figure 1 qui montre un ensemble de rouleau 10 destiné à une machine agricole et comportant un seul rouleau 12, par exemple un rouleau pour semoir. Le rouleau 12 comprend un tube 14 monté en rotation libre, autour duquel 14 sont enfilés une série de pneumatiques identiques 16. Ces pneumatiques sont empilés de façon jointive les uns contre les autres et maintenus entre deux anneaux d'extrémité 18 et 20 solidarisés au tube 14 pour assurer le maintien et le serrage de la série de pneumatiques dans la direction axiale. Dans l'exemple l'anneau 18 est solidarisé au tube 14, par exemple par soudage, tandis que l'anneau 20 est fixé de manière démontable au tube 14 par des vis. Il est toutefois possible, en variante, de fixer les anneaux 18 et 20 de manière démontable. L'un au moins des anneaux 18 et 20 doit être démontable pour pouvoir monter ou remplacer les pneumatiques. Dans l'exemple considéré, les pneumatiques 16 sont des pneumatiques de type semi-creux comme enseigné par la publication FR-A-2 763 279 au nom de la Demanderesse.

Brièvement, on rappellera qu'un tel pneumatique comporte une partie 22 formant fourreau venant en appui contre la face extérieure du tube 14. La partie 22 formant fourreau est renforcée ici par deux armatures circulaires 24 et elle est reliée à une partie 26 formant bande de roulement par l'intermédiaire de deux flancs opposés 28 disposés inclinés (figure 1). Ce pneumatique définit un espace annulaire creux non gonflé pouvant communiquer avec le milieu ambiant par l'intermédiaire d'un orifice (non représenté) qui, en utilisation, sert à l'équilibrage des pressions.

Les pneumatiques 16 sont identiques entre eux, à l'exception des pneumatiques d'extrémité 16e dont le profil est tronqué et ne comporte qu'un seul flanc 28 incliné, analogue à ceux des pneumatiques courants et un flanc droit 30 qui s'étend perpendiculairement à l'axe du rouleau et du côté extérieur. On comprendra que ces pneumatiques permettent de créer dans le sol des sillons parallèles entre eux de profil identique, sauf pour les deux pneumatiques d'extrémité 16e. Comme indiqué précédemment, l'invention ne se limite pas à ce type de pneumatiques semi-creux. Il peut s'agir d'autres types de pneumatiques, gonflés ou non, avec des profils différents. En outre, il est possible de monter ces pneumatiques, non pas directement autour du tube 14 comme dans l'exemple représenté, mais aussi par l'intermédiaire de jantes. Il est possible aussi de disposer à chaque fois un organe d'espacement entre deux pneumatiques successifs.

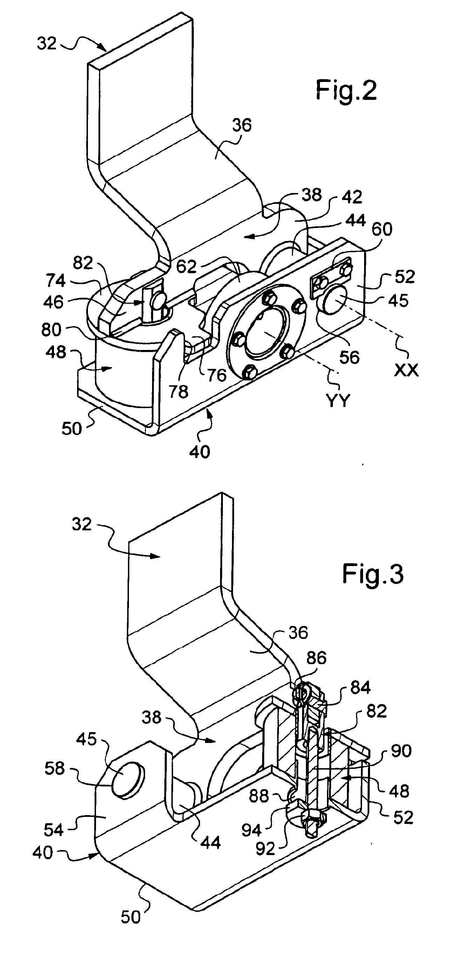

L'ensemble 10 comprend deux bras 32 reliés à un bâti 34, représenté schématiquement, de la machine agricole considérée. Dans l'exemple, les bras 32 sont réalisés sous la forme de montants généralement verticaux dont la partie inférieure forme un double coude 36 et se termine par une branche d'extrémité 38 dont la structure sera décrite plus loin. Chaque bras 32 est dévié ou déporté vers l'intérieur du tube 14, dans la direction axiale du tube, dans une région (partie inférieure du bras) qui porte un levier de suspension 40, logé à l'intérieur du tube 14 et dont la structure sera décrite en détail en référence aux figures 2 et 3.

La figure 2 montre la partie inférieure d'un bras 32 avec sa branche d'extrémité 38 et le double coude 36. Il s'agit ici du bras 32 situé du côté gauche de la figure 1. La branche d'extrémité 38 présente une forme allongée et elle est disposée de manière généralement horizontale. Elle présente une première extrémité 42 portant un manchon 44, qui est traversé par un arbre de pivotement 45, encore appelé pivot, qui s'étend dans une direction généralement horizontale suivant un premier axe de rotation XX. Le manchon 44 est solidarisé à l'extrémité 42, par exemple par soudage, et il est traversé par l'arbre de pivotement 45, ce qui autorise un mouvement de rotation relatif entre le manchon 44 et l'arbre de pivotement 45 autour de l'axe XX. Ainsi l'arbre de pivotement 45 traverse aussi la branche d'extrémité 38. Cette branche d'extrémité 38 présente une seconde extrémité 46 reliée à un organe de rappel élastique 48 qui prend appui sur le levier de suspension 40 à distance de l'axe XX.

Dans l'exemple, le levier de suspension 40 a la forme d'une poutre à section générale en U avec une âme 50 de forme générale rectangulaire oblongue et deux ailes 52 et 54 qui se raccordent perpendiculairement à l'âme 50. L'âme 50 est généralement horizontale, tandis que les ailes 52 et 54 sont généralement verticales. L'aile 52 s'étend sur toute la longueur de l'âme 50, tandis que l'aile 54 est plus courte, comme on le voit le mieux sur la figure 3.

Le manchon 44 est reçu entre les ailes 52 et 54. L'arbre de pivotement 45 possède deux extrémités opposées qui dépassent du manchon 44 et sont reçues dans deux ouvertures circulaires respectives 56 dans l'aile 52 (figure 2) et 58 dans l'aile 54 (figure 3). Une plaque d'arrêt 60 fixée sur l'aile 52 (figure 2) assure un blocage en translation et en rotation de l'arbre de pivotement 45 par rapport au levier de suspension 40. Le levier de suspension 40 est ainsi monté pivotant sur le bras 32 autour de l'axe XX.

L'aile 52 porte en outre un palier 62 (figures 1, 2 et 3) qui permet la libre rotation d'un bout d'arbre 64 (figure 1) autour d'un deuxième axe de rotation YY parallèle au premier axe de rotation XX.

Sur la figure 1, les axes XX et YY (côté gauche de la figure 1) apparaissent dans l'alignement, mais ils ont en fait décalés par rapport au plan de la figure, si l'on considère conjointement la figure 1 avec les figures 2 et 3. En effet l'axe YY est dans le plan de la figure 1, tandis que l'axe XX est en arrière de ce plan. Comme on le voit sur la figure 1, l'aile 54 se situe pratiquement dans le plan de l'anneau d'extrémité 18, tandis que l'aile 52 est décalée vers l'intérieur du tube 14 d'une distance correspondant sensiblement à la largeur de l'âme 40, ce qui permet de déporter le bout d'arbre 64 vers l'intérieur du tube 14.

Le bout d'arbre 64, monté en rotation sur le levier de suspension 40, est solidarisé à un flasque 66 réalisé sous la forme d'une coupelle en fonte. Le bout d'arbre est claveté dans une ouverture centrale 68 du flasque 66 et ce dernier est fixé à sa périphérie par une série de boulons 70, espacés dans la direction circonférentielle, à des taquets respectifs 72 soudés à l'intérieur du tube 14. Ces taquets pourraient, en variante, être remplacés par un anneau continu. Ceci permet au flasque 66 d'être fixé de manière démontable à l'intérieur du tube 14.

On va décrire maintenant plus particulièrement l'organe de rappel élastique 48 en référence aux figures 2 et 3. Celui-ci est constitué, dans l'exemple, d'un corps réalisé en une matière élastique du type caoutchouc et possédant une forme générale de cylindre. Ce cylindre prend appui d'une part sur la face intérieure de l'aile 50 et d'autre part sur une rondelle 74 munie d'une languette radiale 76 propre à s'engager dans une découpe 78 de l'une des ailes du levier de suspension 40, à savoir ici l'aile 52. La rondelle 74 est soudée sur la tranche de la branche d'extrémité 38, au niveau de sa seconde extrémité 46 par des cordons de soudure 80. La languette 76 forme ainsi une première butée pour l'organe de rappel élastique 48.

Par ailleurs, un tirant 82 est interposé entre la branche d'extrémité 38 et l'âme 50 du levier de suspension pour pré-contraindre l'organe de rappel élastique 48. Dans l'exemple, ce tirant 82 est réalisé sous la forme d'une tige dont une extrémité est aménagée en fourche et est articulée à la branche d'extrémité 38 par un pivot 84 doté d'une clavette 86. Ce tirant 82 traverse successivement la rondelle 74, puis une ouverture circulaire 88 (figure 3) aménagée dans l'aile 50. Ce tirant comporte une tige filetée 90 munie d'un écrou 92 prenant appui sur l'aile 50, du côté opposé à l'organe de rappel élastique par une rondelle 94 (figure 3). Grâce à l'écrou 92, il est possible de pré-contraindre, de façon réglable, l'organe de rappel élastique 48 et de régler ainsi le degré d'amortissement de cet organe.

Dans l'exemple représenté, l'organe de rappel élastique 48 est un corps réalisé en une matière élastique du type caoutchouc. Mais, l'invention ne se limite pas à une telle forme de réalisation. Il est possible de réaliser l'organe de rappel élastique sous d'autres formes, par exemple d'un vérin pneumatique ou hydraulique, d'une vessie gonflable, d'un ressort métallique, en particulier hélicoïdal, etc.

Il est possible aussi, en variante, d'intégrer directement l'organe de rappel élastique entre l'arbre de pivotement 45 et le levier de suspension 40. Ainsi, l'expression "organe de rappel élastique" est à considérer ici dans un sens très large.

Comme on peut le voir sur la partie droite de la figure 1, le bras de support respectif 32 est réalisé de façon symétrique et est également déporté vers l'intérieur du tube dans la région qui porte le bras de suspension 40.

Cependant, dans cette forme de réalisation, le bout d'arbre 96, qui est l'homologue du bout d'arbre 64 décrit précédemment, est réalisé de manière différente et s'étend sur une longueur axiale sensiblement plus grande vers l'intérieur du tube central 14 pour permettre le montage d'un organe de freinage 98, décrit plus loin.

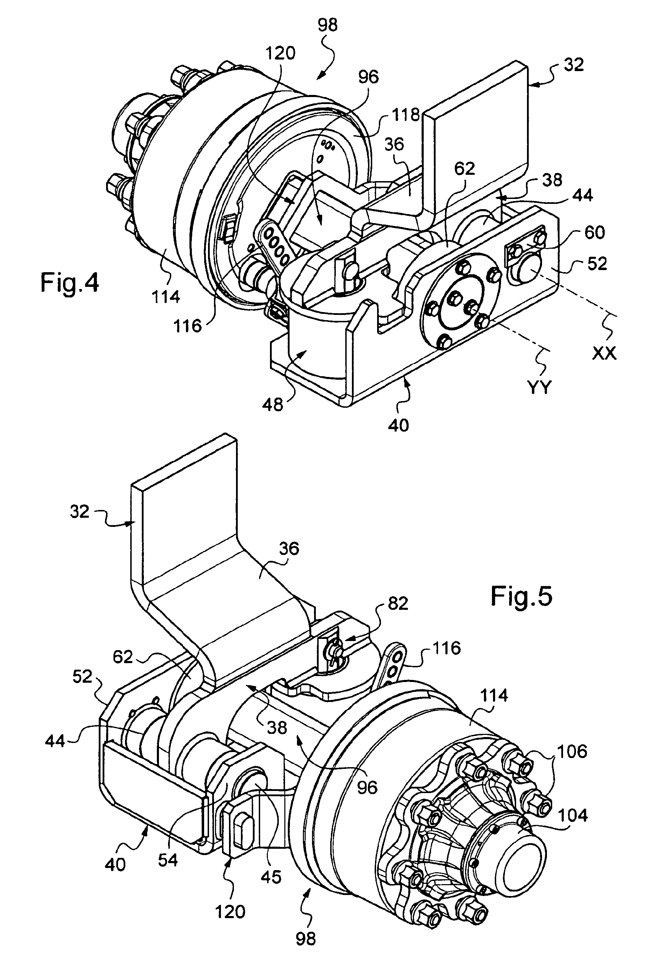

Comme on peut le voir sur les figures 4 et 5, la structure de la branche d'extrémité 38, du levier de suspension 40 et de l'organe de rappel élastique 48 est analogue à celle décrite précédemment pour les éléments respectifs situés du côté gauche de la figure 1. Les axes de rotation XX et YY sont indiqués sur la figure 4.

On voit sur les figures 1 et 5 que l'aile 52 du levier de suspension 40 est ici située sensiblement dans le plan de l'anneau 20 et non vers l'intérieur du tube 14. De plus, à la différence du bout d'arbre 64 qui est monté en rotation, le bout d'arbre 96 est monté fixe sur le levier de suspension respectif 40 et il possède une longueur axiale plus importante que le bout d'arbre 64.

Le bout d'arbre 96 possède une extrémité 100 reçue dans une rotule 101 portée par l'aile 52 du levier de suspension 40 et située sensiblement au niveau de l'anneau 20. Cette rotule assure un blocage en rotation du bout d'arbre 96 avec une possibilité de débattement angulaire de faible valeur. Le bout d'arbre 96 possède une extrémité opposée 102 qui supporte en rotation libre un moyeu 104 équipé à sa périphérie d'une série de boulons 106. Ceci permet la fixation démontable d'un flasque 108 de forme annulaire, lequel est lui-même fixé à des taquets 110, analogues aux taquets 72, qui sont soudés également à l'intérieur du tube 14. La fixation s'effectue également au moyen de boulons respectifs. Là aussi, il est possible, en variante, de remplacer les taquets 110 par un anneau continu. Le flasque 108 est ainsi supporté en rotation par le bout d'arbre 96 et il est fixé de manière démontable à l'intérieur du tube 104. Comme on le voit sur la figure 1, les taquets 110 sont situés à une distance plus importante de l'extrémité correspondante du tube 14 que les taquets 72.

L'organe de freinage 98 comprend un tambour 114 solidaire du moyeu 104. Il s'agit d'un frein à tambour de structure conventionnelle muni intérieurement de garnitures (non représentées) susceptibles d'être mises en mouvement par un levier de commande 116 (figures 4 et 5) par tout système de commande approprié, notamment par une commande hydraulique ou pneumatique. L'organe de freinage 98 comporte en outre un flasque 118 monté fixe (figures 1 et 4) et traversé par le bout d'arbre 96 qui présente une section carrée dans sa partie principale (figures 4 et 5). Une plaque anti-rotation 120 (figures 4 et 5) est portée par l'aile 54 du levier de suspension 40 et traversée par le bout d'arbre 96 pour empêcher la rotation de ce dernier. L'organe de freinage est commandé par un fluide de freinage par l'intermédiaire d'une canalisation (non représentée) susceptible de longer le bras 32 correspondant.

Dans l'ensemble de rouleau de l'invention, chacun des leviers de suspension 40 s'étend de préférence vers l'arrière par rapport au premier axe de rotation XX (arbre de pivotement 45) et par rapport au sens d'avancement du rouleau. Il en résulte alors que le bout d'arbre 64 ou 96 (correspondant à l'axe de rotation YY du rouleau) est situé vers l'arrière par rapport à l'arbre de pivotement 45, si l'on considère le sens d'avancement du rouleau. Cependant, il est possible aussi de prévoir une réalisation inversée, dans laquelle le levier de suspension s'étend vers l'avant.

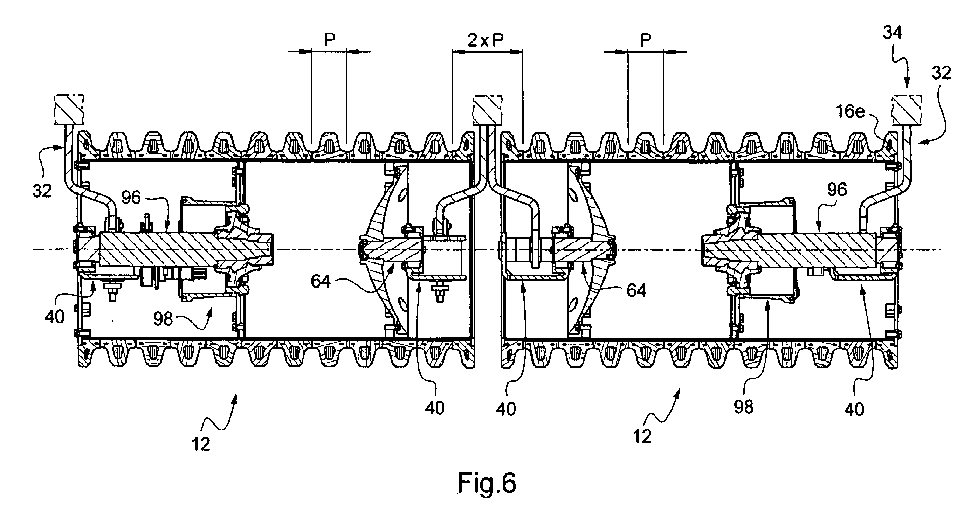

Il est fait maintenant référence à la figure 6 qui montre un ensemble de rouleau 10 comprenant deux rouleaux 12 analogues à celui de la figure 1, portés chacun par deux bras 32 montés sur un bâti commun 34. Chacun de ces rouleaux comporte également un organe de freinage 98. Ces deux organes de freinage 98 sont ici disposés respectivement sur les deux côtés extérieurs de l'ensemble pour faciliter leur alimentation en fluide de freinage. Il est possible, en variante, de les disposer sur les deux côtés intérieurs.

Comme on peut le voir sur la figure 6, les deux rouleaux 14 sont rapprochés. Les pneumatiques respectifs 16 des deux rouleaux ont un pas constant P dans la direction axiale de manière à créer des sillons parallèles dans le sol. Ce pas P correspond aussi à la largeur axiale des pneumatiques (largeur de la partie 22 formant fourreau). Les profils respectifs de deux pneumatiques adjacents 16e appartenant respectivement aux deux tubes 14 sont espacés sensiblement du même pas dans la direction axiale. On retrouve par conséquent une distance 2P considérant les parties extérieures des deux pneumatiques considérés, ce qui permet de conserver le même pas P d'un rouleau à l'autre. Ceci est particulièrement avantageux pour des rouleaux de semoirs.

Ainsi, dans l'exemple de la figure 6, on peut réaliser deux rouleaux dont la longueur axiale est légèrement inférieure à 1,5 mètre, pour former un rouleau complet dont la longueur axiale est sensiblement de l'ordre de 3 mètres. Ceci facilite le virage du rouleau et diminue les frottements, par comparaison à un rouleau unique d'une largeur de 3 mètres.

Les moyens de suspension intégrés dans l'intérieur de chaque rouleau permettent de suivre les irrégularités du sol, aussi bien en plein champ, que sur route, avec des chaussées plus ou moins déformées, et d'absorber les chocs.

Dans l'exemple représenté, chaque rouleau est équipé d'un organe de freinage. Il est possible aussi dans certain cas de réaliser un rouleau sans organe de freinage.

Il est possible aussi de prévoir deux organes de freinage pour un même rouleau.

L'organe de freinage ne se limite pas non plus à un frein du type à tambour et d'autres types de freins sont envisageables, comme en particulier des freins à disques.

L'invention trouve une application particulière aux rouleaux de semoirs pour machines agricoles mais elle s'applique également à d'autres types de rouleaux en particulier à des rouleaux dont les pneumatiques définissent un profil externe sensiblement plat.

## Revendications

1. Ensemble de rouleau pour machine agricole, comprenant au moins un tube (14) autour duquel sont enfilés des pneumatiques (16), ainsi que deux bras (32) aptes à supporter le tube (14) en rotation à ses deux extrémités,
**caractérisé en ce que** chaque bras (32) porte un levier de suspension (40) logé à l'intérieur du tube (14) et sollicité par un organe de rappel élastique (48), et **en ce que** le levier de suspension (40) est monté pivotant sur le bras (32) autour d'un premier axe de rotation (XX) et supporte un bout d'arbre (64 ; 96) qui porte un flasque (66 ; 108) fixé à l'intérieur du tube (14) pour la rotation de ce tube autour d'un deuxième axe de rotation (YY) parallèle au premier axe de rotation (XX).

2. Ensemble de rouleau selon la revendication 1, dans lequel chaque bras (32) est dévié vers l'intérieur du tube (14), dans la direction axiale du tube, dans une région qui porte le levier de suspension (40).

3. Ensemble de rouleau selon l'une des revendications 1 et 2, dans lequel chaque bras (32) comporte une branche d'extrémité (38) ayant une première extrémité (42) portant un arbre de pivotement (45) pour la rotation du levier de suspension (40) autour du premier axe de rotation (XX) et une seconde extrémité (46) reliée à l'organe de rappel élastique (48).

4. Ensemble de rouleau selon la revendication 3, dans lequel chaque levier de suspension (40) a la forme d'une poutre à section générale en U avec une âme (50) et deux ailes (52, 54) et dans lequel l'arbre de pivotement (45) traverse la branche d'extrémité (38) et est reçu dans les deux ailes (52, 54) du levier de suspension (40), tandis que l'organe de rappel élastique (48) est relié à l'âme (50) du levier de suspension (40).

5. Ensemble de rouleau selon la revendication 4, dans lequel l'organe de rappel élastique (48) est muni d'une butée (76) qui s'engage dans une découpe (78) de l'une (52) des ailes du levier de suspension (40).

6. Ensemble de rouleau selon l'une des revendications 4 et 5, dans lequel un tirant (82) est interposé entre la branche d'extrémité (38) du bras (32) et l'âme (50) du levier de suspension (40) pour pré-contraindre l'organe de rappel élastique (48).

7. Ensemble de rouleau selon l'une des revendications 1 à 6, dans lequel l'organe de rappel élastique (48) est un corps réalisé en une matière élastique du type caoutchouc et est traversé par le tirant (82).

8. Ensemble de rouleau selon l'une des revendications 1 à 7, dans lequel chaque levier de suspension (40) s'étend vers l'arrière par rapport au premier axe de rotation (XX) et par rapport au sens d'avancement du rouleau.

9. Ensemble de rouleau selon l'une des revendications 1 à 8, dans lequel le bout d'arbre (64) est monté en rotation sur le levier de suspension (40) et est solidarisé au flasque (66), lequel est fixé de manière démontable à l'intérieur du tube (14).

10. Ensemble de rouleau selon l'une des revendications 1 à 9, dans lequel l'un au moins des leviers de suspension (40) comporte un organe de freinage (98) pour freiner le flasque (108) respectif.

11. Ensemble de rouleau selon la revendication 10, dans lequel le bout d'arbre (64) est monté fixe sur le levier de suspension (40) et supporte en rotation le flasque (108), lequel est fixé de manière démontable à l'intérieur du tube (14).

12. Ensemble de rouleau selon l'une des revendications 10 et 11, dans lequel l'organe de freinage (98) comprend un frein à tambour (114).

13. Ensemble de rouleau selon l'une des revendications 1 à 12, dans lequel les pneumatiques (16) enfilés sur le tube (14) présentent des profils respectifs en dôme aptes à former dans le sol une série de sillons parallèles.

14. Ensemble de rouleau selon l'une des revendications 1 à 13, comportant deux rouleaux (12) dont les tubes (14) respectifs sont disposés en alignement axial et les bras (32) sont portés par un bâti commun (34).

15. Ensemble de rouleau selon les revendications 13 et 14, prises en combinaison, dans lequel les profils respectifs en dôme des pneumatiques (16) enfilés sur les deux tubes (14) ont un pas (P) constant dans la direction axiale et les profils de deux pneumatiques adjacents (16e) appartenant respectivement aux deux tubes sont espacés sensiblement du même pas dans la direction axiale.

## Patentansprüche

1. Walzenanordnung für landwirtschaftliche Maschinen, mit wenigstens einem Rohr (14), um das Luftreifen (16) aufgereiht sind, sowie zwei Armen (32), die in der Lage sind, das Rohr (14) an dessen beiden Enden bei der Drehung zu stützen,
**dadurch gekennzeichnet, dass** jeder Arm (32) einen Aufhängungshebel (40) trägt, der im Inneren des Rohres (14) angeordnet ist und durch ein elastisches Federorgan (48) beaufschlagt ist, und dass der Aufhängungshebel (40) schwenkbeweglich an dem Arm (32) um eine erste Drehachse (XX) angebracht ist und einen Wellenabschnitt (64; 96) trägt, der einen Flansch (66; 108) trägt, der am Inneren des Rohres (14) für die Drehung dieses Rohres um eine zweite Drehachse (YY) parallel zur ersten Drehachse (XX) befestigt ist.

2. Walzenanordnung nach Anspruch 1, bei der jeder Arm (32) in das Innere des Rohres (14) in die Axialrichtung des Rohres abgelenkt ist, in einem Bereich, der den Aufhängungshebel (40) trägt.

3. Walzenanordnung nach Anspruch 1 oder 2, bei der ein jeder Arm (32) einen Endzweig (38) aufweist, der ein erstes Ende (42), das eine Schwenkwelle (45) für die Drehung des Aufhängungshebels (40) um die erste Drehachse (XX) und ein zweites Ende (46) aufweist, das mit dem elastischen Federorgan (48) verbunden ist.

4. Walzenanordnung nach Anspruch 3, bei der jeder Aufhängungshebel (40) die Form eines Trägers von allgemeinem U-Querschnitt hat, mit einer Seele (50) und zwei Flügeln (52, 54), und in dem die Schwenkwelle (45) den Endzweig (38) durchquert und in den beiden Flügeln (52, 54) des Aufhängungshebels (40) aufgenommen ist, während das elastische Federorgan (48) mit der Seele (50) des Aufhängungshebels (40) verbunden ist.

5. Walzenanordnung nach Anspruch 4, bei dem das elastische Federorgan (48) mit einem Anschlag (76) versehen ist, der in einen Ausschnitt (78) von einem (52) der Flügel des Aufhängungshebels (40) eingreift.

6. Walzenanordnung nach Anspruch 4 oder 5, bei der ein Stehbolzen (82) zwischen dem Endzweig (38) des Arms (32) und der Seele (50) des Aufhängungshebels (40) zwischengesetzt ist, um das elastische Federorgan (48) vorzuspannen.

7. Walzenanordnung nach einem der Ansprüche 1 bis 6, bei der das elastische Federorgan (48) ein Körper ist, der aus einem elastischen Material vom Typ Gummi gebildet ist und von dem Stehbolzen (82) durchquert wird.

8. Walzenanordnung nach einem der Ansprüche 1 bis 7, bei der jeder Aufhängungshebel (40) sich nach hinten bezüglich der ersten Drehachse (XX) und bezüglich der Voranbewegung der Rolle erstreckt.

9. Walzenanordnung nach einem der Ansprüche 1 bis 8, bei der das Wellenende (64) drehbeweglich an dem Aufhängungshebel (40) angebracht und mit dem Flansch (66) verbunden ist, welcher auf demontierbare Weise im Inneren des Rohres (14) befestigt ist.

10. Walzenanordnung nach einem der Ansprüche 1 bis 9, bei der wenigstens einer der Aufhängungshebel (40) ein Bremsorgan (98) aufweist, um den entsprechenden Flansch (108) zu bremsen.

11. Walzenanordnung nach Anspruch 10, bei der das Wellenende (64) fest an dem Aufhängungshebel (40) angebracht ist und den Flansch (108) bei der Drehung trägt, der auf entfernbare Weise im Inneren des Rohres (14) befestigt ist.

12. Walzenanordnung nach Anspruch 10 oder 11, bei der das Bremsorgan (98) eine Trommelbremse (114) aufweist.

13. Walzenanordnung nach einem der Ansprüche 1 bis 12, bei der die auf dem Rohr (14) aufgereihten Luftreifen (16) entsprechende domartige Profile aufweisen, die in der Lage sind, im Boden eine Reihe von parallelen Furchen zu bilden.

14. Walzenanordnung nach einem der Ansprüche 1 bis 13, mit zwei Rollen (12), deren Rohre (14) in axialer Ausrichtung angeordnet sind und die Arme (32) durch ein gemeinsames Gestell (34) getragen werden.

15. Walzenanordnung nach Anspruch 13 und 14 in Kombination, bei der die entsprechenden Domprofile der Luftreifen (16), die auf den beiden Rohren (14) aufgereiht sind, eine konstante Steigung (P) in axialer Richtung haben, und die Profile von zwei benachbarten Luftreifen (16e), die entsprechend zu beiden Rohren gehören, im Wesentlichen mit derselben Steigung in Axialrichtung beabstandet sind.

## Claims

1. Roller assembly for agricultural machine, comprising at least one tube (14) onto which tyres (16) are threaded, as well as two arms (32) adapted to support the tube (14) in rotation at both its ends,
**characterised in that** each arm (32) carries a suspension lever (40) housed inside the tube (14) and acted upon by a resilient recoil member (48), and **in that** the suspension lever (40) is mounted on the arm (32) so as to be pivotable about a first rotation axis (XX) and supports a shaft end (64; 96) which carries a cheek (66; 108) fixed to the inside of the tube (14) for the rotation of this tube about a second rotation axis (YY) parallel to the first rotation axis (XX).

2. Roller assembly according to claim 1, wherein each arm (32) is deflected towards the inside of the tube (14), in the axial direction of the tube, in a region that carries the suspension lever (40).

3. Roller assembly according to one of claims 1 and 2, wherein each arm (32) comprises an end branch (38) having a first end (42) carrying a pivot shaft (45) for rotation of the suspension lever (40) about the first rotation axis (XX) and a second end (46) connected to the resilient recoil member (48).

4. Roller assembly according to claim 3, wherein each suspension lever (40) is in the shape of a beam of generally U-shaped section with a core (50) and two wings (52, 54) and wherein the pivot shaft (45) passes through the end branch (38) and is received in the two wings (52, 54) of the suspension lever (40), whereas the resilient recoil member (48) is connected to the core (50) of the suspension lever (40).

5. Roller assembly according to claim 4, wherein the resilient recoil member (48) is provided with an abutment (76) that engages in a cut-out (78) in one (52) of the wings of the suspension lever (40).

6. Roller assembly according to one of claims 4 and 5, wherein a tie-rod (82) is interposed between the end branch (38) of the arm (32) and the core (50) of the suspension lever (40) for pre-stressing the resilient recoil member (48).

7. Roller assembly according to one of claims 1 to 6, wherein the resilient recoil member (48) is a body made of a rubber-type elastic material and the tie-rod (82) passes through it.

8. Roller assembly according to one of claims 1 to 7, wherein each suspension lever (40) extends backwards with respect to the first rotation axis (XX) and relative to the direction of advance of the roller.

9. Roller assembly according to one of claims 1 to 8, wherein the shaft end (64) is rotatably mounted on the suspension lever (40) and is fixedly attached to the cheek (66) which is removably fixed to the inside of the tube (14).

10. Roller assembly according to one of claims 1 to 9, wherein at least one of the suspension levers (40) comprises a braking member (98) for braking the respective cheek (108).

11. Roller assembly according to claim 10, wherein the shaft end (64) is fixedly mounted on the suspension lever (40) and supports the cheek (108) in rotation, which is removably fixed to the inside of the tube (14).

12. Roller assembly according to one of claims 10 and 11, wherein the braking member (98) comprises a drum brake (114).

13. Roller assembly according to one of claims 1 to 12, wherein the tyres (16) threaded onto the tube (14) have respective dome-shaped profiles adapted to form a series of parallel furrows in the ground.

14. Roller assembly according to one of claims 1 to 13, comprising two rollers (12) the respective tubes (14) of which are arranged in axial alignment and the arms (32) are carried by a common frame (34).

15. Roller assembly according to claims 13 and 14 taken in combination, wherein the respective dome-shaped profiles of the tyres (16) threaded onto the two tubes (14) have a constant pitch (P) in the axial direction and the profiles of two adjacent tyres (16e) belonging to the two tubes respectively are spaced at substantially the same pitch in the axial direction.
